# EUROPEAN PATENT SPECIFICATION

(11) **EP 0 355 911 B1**
(45) Date of publication and mention of the grant of the patent: **03.11.1993**
(21) Application number: 89202077.7
(22) Date of filing: 14.08.1989
(51) Int. Cl.: C09J 7/02

(54) **Self-adhesive product**
Selbstklebekörper
Ensemble auto-adhésif

(30) Priority: 15.08.1988 FI 883770
(43) Date of publication of application: 28.02.1990
(73) Proprietor: YHTYNEET PAPERITEHTAAT OY, 33101 Tampere (FI)
(72) Inventor: Pynnönen, Sampo T., SF-33450 Siivikkala (FI)
(74) Representative: Smulders, Theodorus A.H.J., Ir.

(56) References cited:
- EP-A- 0 264 959
- CH-A- 603 780
- US-A- 3 312 005

## Description

The present invention relates to a self-adhesive product defined in more detail in the preamble of claim 1.

A self-adhesive product as set forth in the preamble of claim 1 is prior known from the Finnish patent 74723. This self-adhesive product is favourable as such but problems may occur at least in some applications, particularly in terms of the adhesive layer. If the adhesive layer is continuous, it is difficult at least with certain types of adhesive to obtain a rupture in the adhesive layer between the components of a release layer. On the other hand, there are production problems in the assembly produced by means of intermediate strips described in the cited patent since there are technical difficulties in placing the intermediate strips in a self-adhesive product in a manner that said intermediate strips lie in the aligned zones of the first and second components of a release layer.

An object of this invention is to introduce a self-adhesive product which is reliable in service and simple to manufacture.

In order to achieve this object, a self-adhesive product of the invention is principally characterized by what is set forth in the characterizing clause of the annexed claim 1. The disposition of adhesive strips as defined in the claim serves to make sure that there is at least one strip free of adhesive within the area of the aligned release layer components and, thus, no alignment is required.

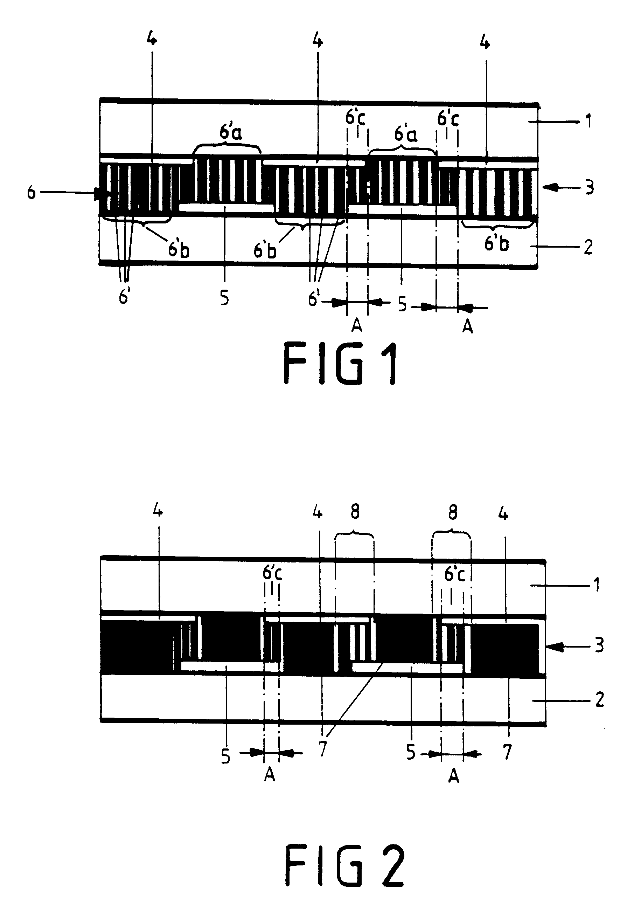

The intention will be described in more detail in the following specification with reference made to the accompanying drawing. Figs. 1 and 2 in the drawing are schematical cross-sections of embodiments of a self-adhesive product of the invention.

It should be noted that the drawing has been made to generally illustrate the inventive idea. Thus, the dimensions are not the same as those occurring in practice. For example, when the surface layers are made of paper, the thickness of a composite release and adhesive layer between the facing surface layers is usually 15-40 um, the components of a release layer having a thickness of circa 1 um.

Referring particularly to fig. 1, a self-adhesive product of the invention comprises a first surface layer 1 and a second surface layer 2. These layers are disposed to face each other so as to leave therebetwwen a composition 3 consisting of a release layer and an adhesive layer. A first component 4 of the release layer adheres to first surface layer 1 and a second component 5 of the release layer similarly to second surface layer 2. The adhesive layer 6 consists of parallel adhesive strips 6′a, 6′b and 6′c.

As shown in the drawing, the adhesive layer 6 extends between the sections of first component 4 of the release layer joining said first surface layer 1 and adheres to the first surface layer. Substantially at those parts, wherein the adhesive layer is in direct contact with first surface layer 1, said second surface layer 2 carries second component 5 of the release layer, the adhesive layer adhering between the sections thereof. Adhesive layer 6 and surface layers 1 and 2 have a strong adhesion to each other while adhesion between the release layer and the adhesive layer is weak. As shown in the drawing, the release layer components 4 and 5 are designed to lie partially in alignment with each other in the direction perpendicular to the principal plane of the surface layers. Adhesive layer 6 is divided into adhesive strips having no adhesive material therebetween. Thus, the adhesive strips 6′a of adhesive layer 6 attached to first surface layer 1 and the adhesive strips 6′b attached to second surface layer 2 are already mechanically separated from each other in the self-adhesive product. The adhesive strips 6′c within the aligning section A of release layer components 4, 5 remain occasionally stuck with either one or both surface layers as they are removed. The width of section A exceeds that of individual adhesive strips 6′c. Thus, an adhesive strips within section A is never in contact with both surface layers but, instead, it places itself either between the aligning components of the release layer or partially between said aligning components of the release layer and either one of the surface layers and the release layer component aligned therewith. Another possibility (fig. 2) to form continuous wider adhesive strips 7 within the production tolerances and to provide at section A a zone 8 consisting of a plurality of narrow adhesive strips and which is wider than said aligned section A of the release layer components.

A structure of the invention is preferred especially when producing a self-adhesive product from a web-like continuous material. Thus, in terms of manufacturing technique, it is preferable to provide both surface layers with elongated, release layer forming zones, spaced from each other in the direction transverse of the web-like material. The release layers are attached to both surface layers and the adhesive strips which provide an adhesive layer are attached in the longitudinal direction of the zones to either one of the surface layers followed by adjoining the surface layers together.

The self-adhesive product can be a continuous form, at least one side of it being provided with a perforation zone while the product is intended for a printing effected on both outer faces of the surface layers by means of a printer.

The following explains yet some possible material alternatives for various layers:
The surface layer can be free of wood or made of pigmented MF-paper, pigmented or coated SC-paper, fluorescence paper, copying paper, thermal printing paper, protection coated thermal printing paper, plastic laminated paper, plastic layer laminate, plastic or other synthetic paper.

The adhesive layer can be made of any self-adhesive glue (i.e. sticker adhesive), e.g. dispersion, emulsion (solvent or water based) glue. As a raw material for these it is possible to use various polyacrylates or vinyl acetates or mixtures thereof.

The adhesive can be characterized as permanent or removable according to its possible applications.

One applicable type of adhesive is a melted glue consisting of three components:
1. A block copolymer, such as
   styrene-butadiene-styrene or
   styrene-isopropene-styrene
2. An adherence-promoting resin, such as
   - wood resin, non-stabilized
   - wood resin, stabilized (ester, disproportioned, dimensioned or otherwise stabilized)
   - synthetic hydrocarbon resins
3. Plasticizer, such as
   - oil,
   - phtalate,
   - liquid, stabilized wood or hydrocarbon resin
Prior to its application, the release layer can be either in the form of a dispersion, emulsion or in the form of a liquid composition containing 100 % of dry matter. The recommended qualities include silicones and midified silicones. The modified silicones can be provided by copolymerizing silicones with other, non-releaseable agents or they can be produced by adding non-silicone substances into a silicone solution prior to the application on a surface layer. Other removable agents that can be used include polyethylene, fluorocarbon, a werner-type chromium complex and polyvinyl octadekylcarbonate.

The following example illustrates a structure of the invention.

Upon a continuous paper web, which ends up as the surface layer of a self-adhesive product, were laid adjacent strips which extended longitudinally of the web and provided a section of the release layer and had a width of 16 mm and a mutual distance in the crosswise direction of web of 10 mm. An adhesive layer was provided upon this release layer section at the next stage. The adhesive layer included adjacent adhesive strips extending longitudinally of the web and having a width of 1 mm and a mutual distance in the crosswise direction of the web of 0,5 mm. Upon the adhesive layer consisting of adjacent adhesive strips was laid another ontinuous web which included strips forming a section of the release layer. The placing was effected in a manner that the width of the aligned section A of the release layer components in a finished self-adhesive product was 3 mm in the crosswise direction of the web.

The performed release tests indicated that the dimensional variation resulting from the width of release layer components, their distances in the crosswise direction of the web, from adhesive strips, their distances in the crosswise direction of the web and from the width of section A and from their placing and manufacturing technique was not significant, since the surface layers and the adjoining section of the adhesive layer released from each other without any trouble.

## Claims

1. A self-adhesive product, comprising two opposing surface layers (1, 2) with a release layer (4, 5) and and adhesive layer (6) laid therebetween, said release layer (4, 5) consisting of two components in a manner that a first release layer component (4) is formed as a part of first surface layer (1) and a second release layer component (5) the same way as a part of second surface layer (2) whereby, at the first release component, said adhesive layer (6) substantially reaches into second surface layer (2) and vice versa and the first (4) and second (5) release layer components are partly aligned with each other in a direction perpendicular to the principal plane of surface layers (1, 2), **characterized** in that said adhesive layer (6), at least within the aligned section (A) of first (4) and second (5) release layer components, is formed of adhesive strips (6′c) having a width which is less than that of the aligned section (A) of first (4) and second (5) release layer components.

2. A self-adhesive product as set forth in claim 1, **characterized** in that said adhesive layer (6) is entirely formed of said adhesive strips (6′a, 6′b, 6′c).

3. A self-adhesive product as set forth in claim 1, **characterized** in that adhesive strips (6′c) are placed in zones (8) which are adapted to be placed in the aligned section (A) of the first (4) and second (5) release layer components, that said zone (8) has a width which exceeds that of section (A).

4. A self-adhesive product as set forth in claim 3, **characterized** in that between said zones (8) the adhesive layer consists of continuous adhesive strips (7).

## Patentansprüche

1. Selbstklebe-Körper mit zwei einander gegenüberliegenden Deckbahnen (1,2), zwischen denen sich eine Ablöseschicht (4,5) und eine Klebschicht (6) befinden, wobei die Ablöseschicht aus zwei Teilbeschichtungen besteht, und zwar einer ersten Ablösebeschichtung (4), die Teil der ersten Deckbahn (1) ist, und einer zweiten Ablösebeschichtung (5), die Teil der zweiten Deckbahn (2) ist, in solcher Anordnung, dass im Bereich der ersten Ablösebeschichtung (4) die Klebschicht (6) bis zur zweiten Deckbahn reicht und umgekehrt, und dass die Ablösebeschichtungen senkrecht zur Ebene der Deckbahn (1,2) gesehen sich teilweise überlappen, dadurch gekennzeichnet, dass diese Klebschicht (6) mindestens im Ueberlappungsbereich (A), der ersten und zweiten Ablösebeschichtung (4) und (5) der Deckbahnen, Klebstoffstreifen (6'c) aufweist, deren Breite geringer ist als diejenige des Ueberlappungsbereiches (A) der ersten (4) und zweiten (5) Ablösebeschichtung.

2. Selbstklebekörper nach Anspruch 1, dadurch gekennzeichnet, dass die Klebschicht (6) gänzlich aus Klebstoffstreifen (6'a, 6'b, 6'c) besteht.

3. Selbstklebekörper nach Anspruch 1, dadurch gekennzeichnet, dass Klebstoffstreifen (6'c) in Zonen (8) angebracht sind, die auf den Ueberlappungsbereich (A) zwischen der ersten (4) und der zweiten Ablösebeschichtung (5) angebracht sind, und dass diese Zonen (8) breiter sind als der Ueberlappungsbereich (A).

4. Selbstklebekörper nach Anspruch 3, dadurch gekennzeichnet, dass die Klebschicht zwischen den Zonen (8) als durchgehende Klebstoffstreifen (7) ausgebildet ist.

## Revendications

1. Produit auto-adhésif comprenant deux couches de surface opposées (1, 2), entre lesquelles sont interposées une couche séparatrice (4, 5) et une couche adhésive (6), ladite couche séparatrice (4, 5) étant composée de deux composants de telle manière qu'un premier composant (4) de la couche séparatrice forme une partie de la première couche de surface (1) et un deuxième composant (5) de la couche séparatrice fasse de même partie de la deuxième couche de surface (2), de sorte que, dans le premier composant de la couche séparatrice, ladite couche adhésive (6) atteint sensiblement la deuxième couche de surface (2) et inversement, et de sorte que les premier (4) et deuxième (5) composants de la couche séparatrice sont partiellement alignés l'un par rapport à l'autre dans une direction perpendiculaire au plan principal des couches de surface (1, 2), caractérisé en ce que ladite couche adhésive (6) est formée, du moins dans la section alignée (A) des premier (4) et deuxième (5) composants de la couche séparatrice, de bandelettes adhésives (6'c) ayant une largeur inférieure à celle de la section alignée (A) des premier (4) et deuxième (5) composants de la couche séparatrice.

2. Produit auto-adhésif selon la revendication 1, caractérisé en ce que ladite couche adhésive est entièrement formée desdites bandelettes adhésives (6'a, 6'b, 6'c).

3. Produit auto-adhésif selon la revendication 1, caractérisé en ce que les bandelettes adhésives (6'c) sont placées dans des zones (8) qui sont adaptées pour être placées dans la section alignée (A) des premier (4) et deuxième (5) composants de la couche séparatrice, et en ce que ladite zone (8) a une largeur supérieure à celle de la section (A).

4. Produit auto-adhésif selon la revendication 3, caractérisé en ce que, entre lesdites zones (8), la couche adhésive est composée de bandelettes adhésives continues (7).
